# EUROPEAN PATENT APPLICATION

(11) **EP 4 332 711 A1**
(43) Date of publication of application: **06.03.2024**
(21) Application number: 23193302.9
(22) Date of filing: 24.08.2023
(51) Int. Cl.: G05D 1/00

(54) **CREATION OF A VIRTUAL BOUNDARY FOR A ROBOTIC GARDEN TOOL**

(30) Priority: 31.08.2022 US 202263374204 P
(71) Applicant: Techtronic Cordless GP, Anderson, SC 29621 (US)
(72) Inventor: LEE, Hei Man, Kwai Chung (CN); LAI, Hok Sum Sam, Kwai Chung (CN); CHOI, Man Ho, Kwai Chung (CN); NG, Ho Lam, Kwai Chung (CN); LI, Shing Hin, Kwai Chung (CN)
(74) Representative: Novagraaf Group

(57) **Abstract**

A method of creating a virtual boundary for a robotic garden tool includes receiving location coordinates of a location in which the robotic garden tool is intended to be operated. The method also includes retrieving, from a first server and based on the location coordinates, a preexisting visual media file of the location in which the robotic garden tool is intended to be operated. The preexisting visual media file includes metadata that includes coordinate information of the location shown in the preexisting visual media file. The method includes generating virtual boundary coordinates of the virtual boundary based at least partially on the preexisting visual media file and the coordinate information. The method includes controlling, with a first electronic processor of the robotic garden tool, the robotic garden tool to be confined by the virtual boundary to remain in an operating area during operation of the robotic garden tool.

## Description

### RELATED APPLICATIONS

This application claims priority to U.S. Provisional Application No. 63/374,204, filed August 31, 2022 (Attorney Docket No. 206737-9054-US03), the entire contents of which are hereby incorporated by reference.

### FIELD

The present disclosure relates to robotic garden tools, particularly to methods and systems for creating one or more virtual boundaries for a robotic garden tool within an operating area, particularly, using a preexisting visual media file of a location where the operating area is located.

### SUMMARY

One embodiment includes a method of creating a virtual boundary for a robotic garden tool. The method may include receiving location coordinates of a location in which the robotic garden tool is intended to be operated. The method may also include retrieving, from a first server and based on the location coordinates, a preexisting visual media file of the location in which the robotic garden tool is intended to be operated. The preexisting visual media file may include metadata that includes coordinate information of the location shown in the preexisting visual media file. The method may also include generating virtual boundary coordinates of the virtual boundary based at least partially on the preexisting visual media file and the coordinate information. The method may also include controlling, with a first electronic processor of the robotic garden tool, the robotic garden tool to be confined by the virtual boundary to remain in an operating area during operation of the robotic garden tool.

In addition to any combination of features described above, receiving the location coordinates, retrieving the preexisting visual media file, and generating the virtual boundary coordinates may be performed by an external device of a user. In addition to any combination of features described above, the method may include transmitting, with a network interface of the external device, the virtual boundary coordinates to the robotic garden tool for storage in a memory of the robotic garden tool.

In addition to any combination of features described above, receiving the location coordinates may be performed by an external device. In addition to any combination of features described above, the method may include transmitting, with a first network interface of the external device, the location coordinates to a second server. In addition to any combination of features described above, retrieving the preexisting visual media file and generating the virtual boundary coordinates may be performed by the second server. In addition to any combination of features described above, the method may include transmitting, with a second network interface of the second server, the virtual boundary coordinates to the robotic garden tool for storage in a memory of the robotic garden tool.

In addition to any combination of features described above, the external device may include one of a first external device of a user of the robotic garden tool or a second external device of a seller of the robotic garden tool.

In addition to any combination of features described above, transmitting the virtual boundary coordinates to the robotic garden tool may include transmitting the virtual boundary coordinates to the robotic garden tool via the external device by transmitting, with the second network interface of the second server, the virtual boundary coordinates to the external device that then transmits, via the first network interface of the external device, the virtual boundary coordinates to the robotic garden tool.

In addition to any combination of features described above, receiving the location coordinates and retrieving the preexisting visual media file may be performed by an external device. In addition to any combination of features described above, the method may include transmitting, with a first network interface of the external device, the location coordinates and the preexisting visual media file to the robotic garden tool. In addition to any combination of features described above, generating the virtual boundary coordinates may be performed by the first electronic processor of the robotic garden tool.

In addition to any combination of features described above, receiving the location coordinates, retrieving the preexisting visual media file, and generating the virtual boundary coordinates may be performed by the first electronic processor of the robotic garden tool.

In addition to any combination of features described above, the location coordinates may include an address of a property in which the robotic garden tool is intended to be operated.

In addition to any combination of features described above, the preexisting visual media file may include an image including an aerial view of the location in which the robotic garden tool is intended to be operated.

In addition to any combination of features described above, generating the virtual boundary coordinates may include performing image analysis of the preexisting visual media file to identify at least one of the group consisting of a property line of the location, a barrier located at the location, a permanent obstacle located at the location, and combinations thereof. In addition to any combination of features described above, generating the virtual boundary coordinates may include determining, using the image analysis and the coordinate information of the location, a respective location of each of the at least one of the group consisting of the property line of the location, the barrier located at the location, the permanent obstacle located at the location, and combinations thereof. In addition to any combination of features described above, generating the virtual boundary coordinates may include generating the virtual boundary coordinates based on the respective location of each of the at least one of the group consisting of the property line of the location, the barrier located at the location, the permanent obstacle located at the location, and combinations thereof.

In addition to any combination of features described above, the method may include displaying, on a display of an external device, the preexisting visual media file and a representation of the virtual boundary coordinates. In addition to any combination of features described above, the method may include receiving, with the external device, a user input confirming that the virtual boundary coordinates have been generated in a desired manner. In addition to any combination of features described above, the method may include in response to receiving the user input, transmit an indication that the virtual boundary coordinates have been generated in the desired manner to the robotic garden tool to allow the first electronic processor to control the robotic garden tool to be confined by the virtual boundary.

In addition to any combination of features described above, generating the virtual boundary coordinates may include displaying, on a display of an external device, the preexisting visual media file. In addition to any combination of features described above, generating the virtual boundary coordinates may include receiving, with the external device, a user input indicating a position of the virtual boundary within the preexisting visual media file on the display. In addition to any combination of features described above, generating the virtual boundary coordinates may include generating the virtual boundary coordinates based on the user input and the coordinate information of the location.

In addition to any combination of features described above, the method may include displaying, on a display of a first external device of a user of the robotic garden tool, the preexisting visual media file. In addition to any combination of features described above, the method may include receiving, with the first external device, a user input confirming that the preexisting visual media file shows the location in which the robotic garden tool is intended to be operated.

In addition to any combination of features described above, the method may include receiving, with a second external device located at a service center and operated by a service technician, the preexisting visual media file. The preexisting visual media file may have a first image resolution. In addition to any combination of features described above, the method may include retrieving, with the second external device, a second preexisting visual media file of the location in which the robotic garden tool is intended to be operated. The second preexisting visual media file may have a second image resolution that is greater than the first image resolution. In addition to any combination of features described above, generating the virtual boundary coordinates may include generating the virtual boundary coordinates based at least partially on the second preexisting visual media file.

In addition to any combination of features described above, the method may include outputting an instruction that instructs a user to place the robotic garden tool at a specific location. In addition to any combination of features described above, the method may include determining, with the robotic garden tool, a current location of the robotic garden tool. In addition to any combination of features described above, the method may include determining, with the first electronic processor, a drift vector by comparing the current location to a set of the virtual boundary coordinates corresponding to the specific location. In addition to any combination of features described above, the method may include adjusting, with the first electronic processor, each of the virtual boundary coordinates based on the drift vector.

Another embodiments includes a system that may include an external device including a user interface, a first network interface, and a first electronic processor. The first electronic processor may be configured to receive location coordinates of a location in which a robotic garden tool is intended to be operated. The first electronic processor may also be configured to retrieve, with the first network interface from a first server and based on the location coordinates, a preexisting visual media file of the location in which the robotic garden tool is intended to be operated. The preexisting visual media file may include metadata that includes coordinate information of the location shown in the preexisting visual media file. The first electronic processor may also be configured to generate virtual boundary coordinates based at least partially on the preexisting visual media file and the coordinate information. The first electronic processor may also be configured to transmit, via the first network interface, the virtual boundary coordinates to the robotic garden tool. The system may also include the robotic garden tool. The robotic garden tool may include a housing, and a set of wheels coupled to the housing and configured to rotate to propel the robotic garden tool on an operating surface at the location. The robotic garden tool may also include at least one wheel motor coupled to one or more wheels of the set of wheels. The at least one wheel motor may be configured to drive rotation of the one or more wheels. The robotic garden tool may also include a second network interface, and a second electronic processor. The second electronic processor may be configured to receive, via the second network interface, the virtual boundary coordinates from the robotic garden tool. The second electronic processor may also be configured to control the at least one wheel motor such that the robotic garden tool is confined by a virtual boundary defined by the virtual boundary coordinates to remain in an operating area during operation of the robotic garden tool.

In addition to any combination of features described above, the first electronic processor may be configured to generate the virtual boundary coordinates by performing image analysis of the preexisting visual media file to identify at least one of the group consisting of a property line of the location, a barrier located at the location, a permanent obstacle located at the location, and combinations thereof. In addition to any combination of features described above, the first electronic processor may be configured to generate the virtual boundary coordinates by determining, using the image analysis and the coordinate information of the location, a respective location of each of the at least one of the group consisting of the property line of the location, the barrier located at the location, the permanent obstacle located at the location, and combinations thereof. In addition to any combination of features described above, the first electronic processor may be configured to generate the virtual boundary coordinates by generating the virtual boundary coordinates based on the respective location of each of the at least one of the group consisting of the property line of the location, the barrier located at the location, the permanent obstacle located at the location, and combinations thereof.

In addition to any combination of features described above, the first electronic processor may be configured to generate the virtual boundary coordinates by displaying, on the user interface, the preexisting visual media file; receiving, with the user interface, a user input indicating a position of the virtual boundary within the preexisting visual media file on the user interface; and generating the virtual boundary coordinates based on the user input and the coordinate information of the location.

In addition to any combination of features described above, the first electronic processor may be configured to display, on the user interface of the robotic garden tool, the preexisting visual media file. The preexisting visual media file may have a first image resolution. In addition to any combination of features described above, the first electronic processor may be configured to receive, with the user interface, a user input confirming that the preexisting visual media file shows the location in which the robotic garden tool is intended to be operated. In addition to any combination of features described above, the first electronic processor may be configured to in response to receiving the user input, retrieve, via the first network interface, a second preexisting visual media file of the location in which the robotic garden tool is intended to be operated. The second preexisting visual media file may have a second image resolution that is greater than the first image resolution. The first electronic processor may be configured to generate the virtual boundary coordinates based at least partially on the second preexisting visual media file.

In addition to any combination of features described above, an instruction may be configured to be output by (i) the first electronic processor on the user interface of the external device, the second electronic processor on an output device of the robotic garden tool, or both (i) and (ii). The instruction may instruct a user to place the robotic garden tool at a specific location. The second electronic processor may be configured to determine a current location of the robotic garden tool; determine a drift vector by comparing the current location to a set of the virtual boundary coordinates corresponding to the specific location; and adjust each of the virtual boundary coordinates based on the drift vector.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external devices of FIG. 1A according to some example embodiments.
FIG. 4 is a block diagram of the servers of FIG. 1A according to some example embodiments.
FIG. 5 illustrates a flowchart of a method that may be performed by at least one of the robotic garden tool, one or more of the external devices, one or more of the servers, and combinations thereof of FIG. 1A to create a virtual boundary for the robotic garden tool according to some example embodiments.
FIG. 6 illustrates an example visual media file that may be used during execution of the method of FIG. 5 to create the virtual boundary according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

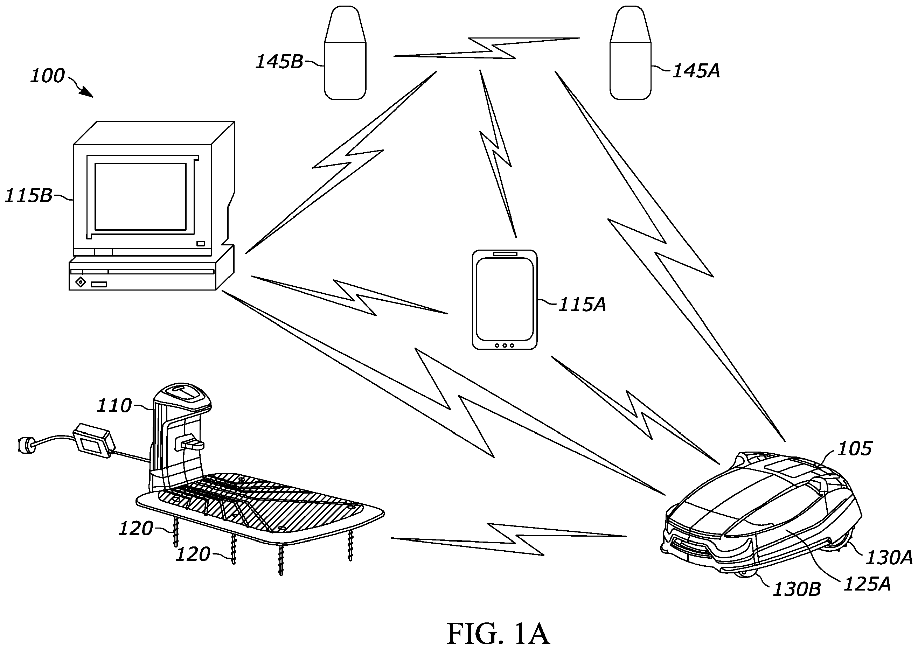

FIG. 1A illustrates a communication system 100 that may include a robotic garden tool 105 (e.g., a robotic lawn mower 105 that may also be referred to as a robotic mower 105), a docking station 110 for the robotic mower 105, a first external device 115A, a second external device 115B, a first server 145A, and a second server 145B according to some example embodiments. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool (e.g., fertilizer to treat grass in the lawn). In some embodiments, a lawn may include paved portions of a property (e.g., a driveway), for example, when the robotic garden tool is used for snow plowing/removal.

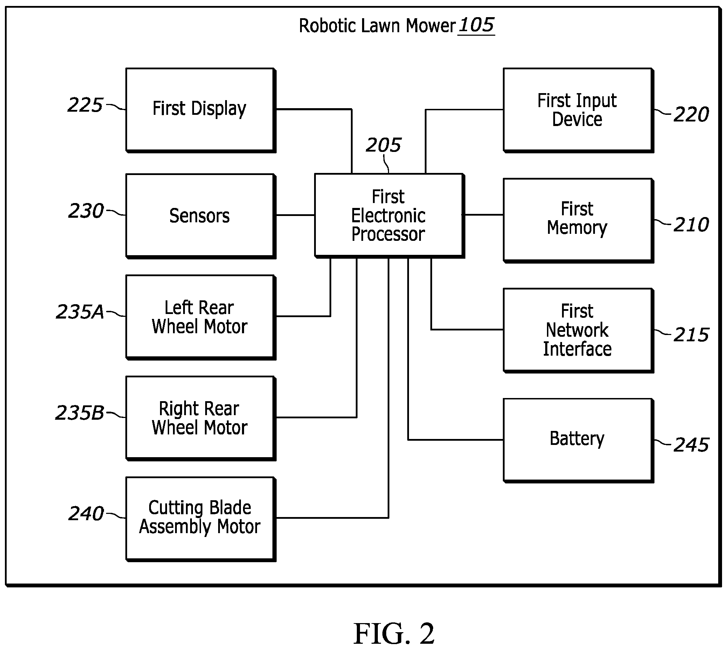

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable. It should be understood that some portions of the virtual boundary may define an area in which the robotic mower 105 is configured not to enter (e.g., an inner virtual boundary that surrounds a flower bed, a tree, etc. within an outer virtual boundary of a yard/lawn). In some embodiments, the robotic mower 105 may determine its location using a location determination component (e.g., a global positioning system (GPS) receiver) by communicating with other devices such as one or more satellites, a base station device used as a reference point, and/or the like. Creation/generation of a virtual boundary according to some example embodiments is also described in detail below.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

Each of the devices in the communication system 100 shown in FIG. 1A may be configured to communicate with each other (e.g., wirelessly or in a wired manner) directly or indirectly. As indicated in FIG. 1A, in some embodiments, the robotic mower 105 may be configured to wirelessly communicate with the docking station 110, either of the external devices 115A, 115B, and/or either of the servers 145A, 145B. For example, the robotic mower 105 may be configured to communicate with the first external device 115A when the robotic mower 105 is within communication range of the first external device 115A (e.g., via Bluetooth^{™}, WiFi^{™}, or the like). In some instances, the robotic mower 105 may additionally or alternatively be configured to communicate with the first external device 115A over a long range communication modality (e.g., cellular network) when the first external device 115A is located remotely from the robotic mower 105. The first external device 115A may be, for example, a user device that is operated by a user/owner of the robotic mower 105. For example, the first external device 115A may be a smart phone (as illustrated), a laptop computer, a tablet computer, a personal digital assistant (PDA), a wireless communication router that allows another external device 115 (not shown) that is located remotely from the robotic mower 105 to communicate with the robotic mower 105, or another electronic device capable of communicating with the robotic mower 105. The first external device 115A may generate a user interface and allow a user to access and interact with robotic mower information. The first external device 115A may receive user inputs to determine operational parameters/instructions for the robotic mower 105, enable or disable features of the robotic mower 105, and the like. In some embodiments, the communication between the first external device 115A and the robotic mower 105 may be wired (e.g., via a Universal Serial Bus (USB) cord configured to connect to respective USB ports of the first external device 115A and the robotic mower 105).

The second external device 115B may be similar to the first external device 115A but may be operated by a service technician at a service center. Accordingly, the external device 115B may be remotely located from the robotic mower 105 such that communication between the robotic mower 105 and the second external device 115B occurs over a long range communication modality (e.g., a cellular network). In some embodiments, communication between the robotic mower 105 and the second external device 115B additionally or alternatively occurs indirectly via the first external device 115A that relays information between the robotic mower 105 and the second external device 115B. The service technician at the service center may be employed or contracted by a manufacturer of the robotic mower 105. As explained in greater detail below, in some instances, the service technician may use the second external device 115B to complete at least some of the steps involved in generating a virtual boundary for one or more robotic mowers 105.

As indicated by FIG. 1A, in some embodiments, each of the external devices 115A, 115B may be configured to communicate with the servers 145A, 145B (e.g., over a cellular network). Additionally, the robotic mower 105 may be configured to communicate directly with any of the servers 145A, 145B (e.g., over a cellular network). In some instances, the robotic mower 105 is additionally or alternatively configured to communicate with one or more of the servers 145A, 145B indirectly, for example, via the first external device 115A that relays information between the robotic mower 105 and the one or more servers 145A, 145B. Furthermore, the two servers 145A and 145B may be configured to communicate with each other.

In some instances, the first server 145A includes a map/location information server that includes a repository of map data/location information. The location information may include a plurality of preexisting visual media files (e.g., aerial images, street images, etc.) of many different locations such as residential properties, commercial properties, government properties, and/or the like. Each preexisting visual media file may be stored in association with location coordinates (e.g., an address of a property, longitude and latitude coordinates, and/or the like) corresponding to the location shown in the respective preexisting visual media file. Additionally, each preexisting visual media file may also be stored with metadata that includes coordinate information of the location shown in the respective preexisting visual media file. For example, each pixel or group of pixels included within a preexisting visual media file may be associated with coordinate information (e.g., latitude and longitude coordinate information, or the like) that indicates an estimated location on earth of the portion of the preexisting visual media file represented by the pixel or group of pixels. In some instances, the preexisting visual media files are created by a third party (e.g., a mapping company) and stored in the first server 145 that is operated and maintained by the third party or a different party. In some instances, the first server 145A may be accessible to the public such that preexisting visual media files of at least some locations may be retrieved from the first server 145A.

In some instances, a visual media file may be considered to be a preexisting visual media file when the visual media file was captured/generated without the intention of the visual media file being used to generate a virtual boundary for the robotic garden tool 105. For example, a visual media file may be considered to be a preexisting visual media file when the visual media file was captured/generated before the time of purchase of the robotic garden tool 105 (i.e., before a user of the robotic garden tool 105 owned the robotic garden tool). In some instances, a visual media file may be considered to be a preexisting visual media file when the visual media file was captured/generated by a third party that is not associated with manufacturing or ownership of the robotic garden tool 105. For example, a visual media file generated/captured after the purchase of the robotic garden tool 105 may nevertheless be considered a preexisting visual media file (that may be used to re-generate a virtual boundary, for example, when a user moves to a new location) as long as the visual media file was captured/generated by a third party that is not associated with manufacturing or ownership of the robotic garden tool 105.

In some instances, the second server 145B includes a virtual boundary creation server configured to generate a virtual boundary for the robotic mower 105 or aid in the generation of the virtual boundary by other devices in the system 100 (e.g., the external devices 115A, 115B and/or the robotic mower 105) by performing at least some of the steps involved in the method of generating the virtual boundary.

FIG. 1A is merely one example communication system 100. In some instances, the communication system 100 includes fewer or additional devices. For example, the second external device 115B and/or the second server 145B may not be present in some instances. To elaborate on more specific instances of this example, in some instances, the second server 145B does not generate the virtual boundary or aid in the generation of the virtual boundary. Rather, the second server 145B may not be present or may merely facilitate transmission of virtual boundary information between the external devices 115A and 115B, between the external device 115A and the robotic mower 105, between other devices in the system, and/or a combination thereof. As another example, the system 100 may include additional external devices 115 that are user devices or service technician devices. As another example, each of the servers 145 may be made up of multiple servers, or the servers 145A, 145B may be combined. The system may include additional servers 145 (e.g., additional map/location information servers maintained by different third parties and that have varying qualities of information). As yet another example, the system 100 may include multiple robotic mowers 105. As another example, the system 100 may include an additional external device 115 and/or additional server 145 operated by a seller/retailer and that is/are configured to communicate with one or more other devices of the system 100 at the time of purchase of the robotic mower 105 as explained in greater detail below.

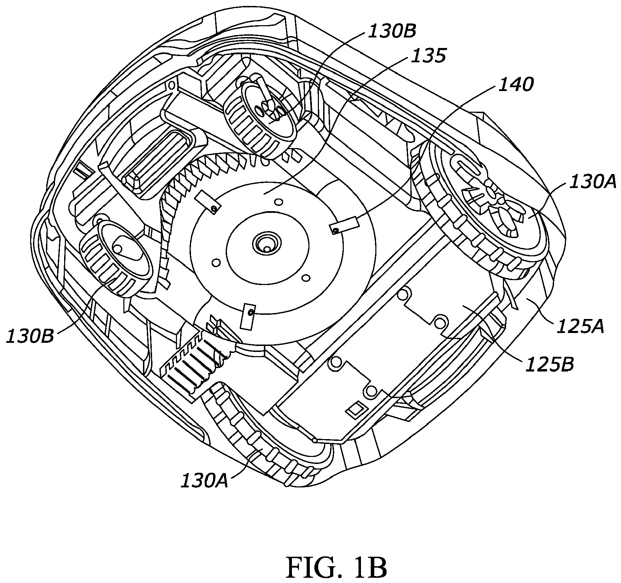

FIG. 1B illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external devices 115A, 115B; the servers 145A, 145B; etc.). In some embodiments, the first network interface 215 includes one or more transceivers for wirelessly communicating with the first external device 115A and/or the docking station 110 (e.g., a first RF transceiver configured to communicate via Bluetooth^{™}, WiFi^{™}, or the like). The first network interface 215 may include an additional transceiver for wirelessly communicating with the servers 145 (and/or the external devices 115 when the external devices 115 are located outside of short-range communication distance) via, for example, cellular communication. The first network interface 215 may also include a first GPS receiver (e.g., a first real-time kinematic global navigating satellite systems (RTK GNSS) receiver) configured to receive a location signal from one or more satellites (not shown) to allow the robotic mower 105 to determine its current location at any given time. In some instances, the first GPS receiver may receive location signals that allow for the determination of the location of the robotic mower 105 without interaction with another device. In other instances, the robotic mower 105 may additionally communicate with a stationary base station device (not shown) to receive reference/calibration location signals that are used in combination with location signals received by the first GPS receiver to determine the location of the robotic mower 105. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, a transceiver/receiver of the first network interface 215, and/or the like.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

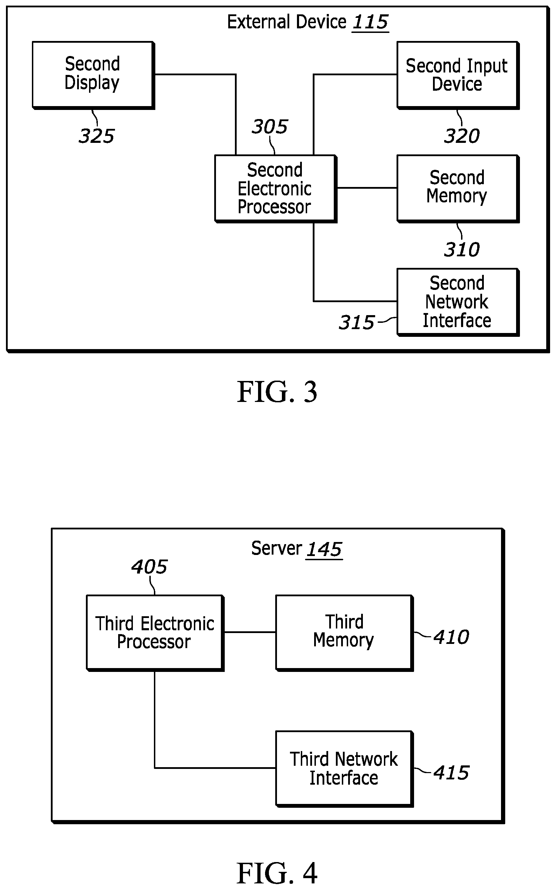

FIG. 3 is a block diagram of the external devices 115A, 115B according to some example embodiments. In the example shown, the external device 115 includes a second electronic processor 305 electrically coupled to a second memory 310, a second network interface 315, a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some instances, the combination of the second input device 320 and the second display 325 may be referred to as a user interface of the external device 115. In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the servers 145 (and/or another external device 115 and/or the robotic mower 105 when these devices are outside of a short-range communication distance) via, for example, cellular communication. The second network interface 315 may also include a second GPS receiver (e.g., a RTK GNSS receiver) configured to receive a location signal from one or more satellites. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315.

In some instances, the external device 115 includes fewer or additional components in configurations different from that illustrated in FIG. 3. For example, the external device 115 may include a battery, another GPS receiver, or the like. In some embodiments, the external device 115 performs functionality other than the functionality described below. In some instances, the first external device 115A includes different components and/or a different configuration of components than the second external device 115B. For example, the second external device 115B may not have a GPS receiver or may have a different GPS receiver than the first external device 115A. As another example, the first external device 115A (e.g., a smart phone) may include a touch screen that acts as both the second input device 320 and the second display 325, while the second external device 115B includes a service technician desktop computer that includes a computer monitor acting as the second display 325 and a separate keyboard and mouse acting as the second input device 320.

FIG. 4 is a block diagram of the servers 145A, 145B according to some example embodiments. In the example shown, the server 145 includes a third electronic processor 405 electrically coupled to a third memory 410 and a third network interface 415. These components are similar to the like-named components of the robotic mower 105 explained above with respect to FIG. 2 and function in a similar manner as described above. In some embodiments, the third network interface 415 includes one or more transceivers for wirelessly communicating information (e.g., map/location information) to the external devices 115A, 115B and/or the robotic mower 105 (e.g., a third RF transceiver configured to communicate via cellular communication and/or the like) to aid the external devices 115A, 115B and/or the robotic mower 105 in creating a virtual boundary for the robotic mower 105 as explained in greater detail below. The third network interface 415 may also allow the server 145 to receive information from one or more devices in the system 100. The third network interface 415 may include one or more additional transceivers for wirelessly communicating with other devices (e.g., another server 145) in the system via different communication modalities. In some embodiments, at least some of the transceivers and/or receivers of the server 145 may be combined or share some elements (e.g., an antenna and/or other hardware).

In some embodiments, the servers 145 includes fewer or additional components in configurations different from that illustrated in FIG. 4. For example, the servers 145 may include a battery, a display or indicator (e.g., a light emitting diode) to provide information to the user, or the like. As another example, the server 145 may include an input device similar to that explained above with respect to FIGS. 2-3. In some embodiments, the servers 145 performs functionality other than the functionality described below. In some instances, the first server 145A includes different components and/or a different configuration of components than the second server 145B.

In embodiments where the system 100 includes an additional external device 115 and/or additional server 145 operated by a seller/retailer, such devices may have the same or similar components as the like-named devices described above.

In some embodiments, the robotic mower 105 travels within a virtual boundary of the operating area 155 to execute a task (e.g., mowing a lawn). The robotic mower 105 may travel randomly within the operating area 155 defined by the virtual boundary. For example, the robotic mower 105 may be configured to travel in an approximate straight line until the robotic mower 105 determines that it has reached the virtual boundary. In response to detecting the virtual boundary, the robotic mower 105 may be configured to turn in a random direction and continue traveling in an approximate straight line along a new path until the robotic mower 105 again determines that it has reached the virtual boundary, at which point this process repeats. In some embodiments, the robotic mower 105 may travel in a predetermined pattern within the operating area 155 defined by the virtual boundary (e.g., in adjacent rows or columns between sides of the virtual boundary) to more efficiently and evenly mow the lawn within the operating area 155. In such embodiments, the robotic mower 105 may determine and keep track of its current location within the operating area 155.

There are a number of existing manners of creating/generating a virtual boundary for a robotic tool. For example, a virtual boundary may be established by manually moving the robotic tool on a desired path (i.e., "dog walking") while the robotic tool stores the desired path. However, this method is not very efficient because the user has to manually move the robotic tool around an operating area. As another example, a virtual boundary may be created automatically by the robotic tool randomly moving on an operating surface and collecting a plurality of trajectories as it randomly moves. However, this method requires complex calculations and may not accurately generate a virtual boundary in many situations such as for a lawn with water areas (e.g., a lake or pond) or other segmented/separated areas. Accordingly, there is a technological problem with respect to creating an accurate virtual boundary for a robotic garden tool in an efficient manner that is not burdensome to the user.

The systems, methods, and devices described herein address the above-noted technological problem by generating virtual boundary coordinates of a virtual boundary at least partially based on a preexisting visual media file of a location in which the robotic mower 105 is intended to be operated. Use of the preexisting visual media file simplifies the process of virtual boundary creation because the user is not required to capture their own images or move the robotic mower 105 in the operating area in order to generate the virtual boundary. Therefore, embodiments described herein enable more efficient and user-friendly creation of the virtual boundary.

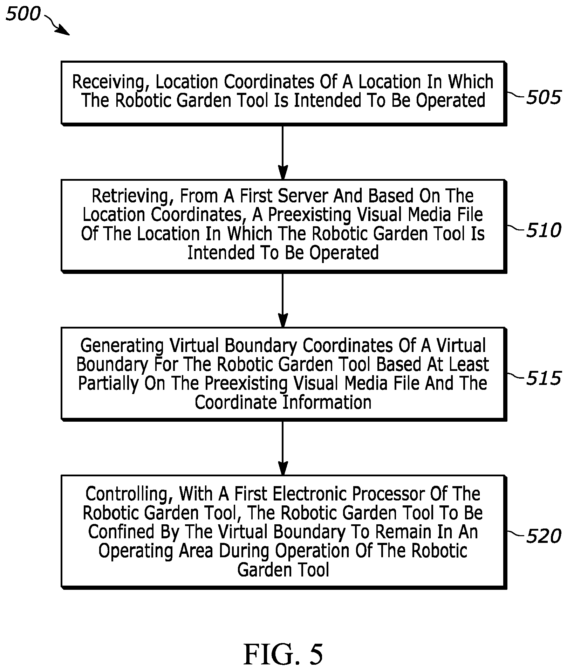

FIG. 5 illustrates a flowchart of a method 500 that may be performed by at least one of the robotic mower 105, one or more of the external devices 115, one or more of the servers 145, and combinations thereof to create a virtual boundary to confine the robotic mower 105 during its operation. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure.

As explained below, blocks 505, 510, and 515 may be executed by any one or a combination of the robotic mower 105, one or more of the external devices 115 (including additional external devices 115 such as a seller/retailer external device 115), and one or more of the servers 145 (including additional servers 145 such as a seller/retailer server 145). Accordingly, functionality explained as being performed by one such device with respect to blocks 505, 510, and 515 may also be performed by another instance of a similar type of device or by a different type of device in some instances.

Additionally, the description herein may describe devices 105, 115, 145B as making determinations/calculations and/or transmitting data to and/or receiving data from other devices 105, 115, 145B. It should be understood that such determinations/calculations are made by the electronic processor 205, 305, 405 of each device. It should also be understood that the transmitting/receiving of data is performed by the electronic processor 205, 305, 405 of each device via a respective network interface 215, 315, 415 of each device.

At block 505, one of the devices 105, 115 receives location coordinates of a location in which the robotic garden tool 105 (e.g., the robotic mower 105) is intended to be operated. In some instances, one of the devices 105, 115 receives, via a first user input, the location coordinates of the location in which the robotic mower 105 is intended to be operated. For example, the robotic mower 105 may receive the location coordinates as entered by a user on the first input device 220 of the robotic mower 105. As another example, the first external device 115A may receive the location coordinates as entered by the user on the second input device 320 of the first external device 115A (e.g., an external device 115 of the user). In some instances, the first external device 115A may be running an application (i.e., "app") that receives the location coordinates. In some instances, the first external device 115A allows the user to access a website where the robotic mower 105 can be purchased online. Once the robotic mower 105 is purchased via the website, the website prompts the user to enter the location coordinates of the location in which the robotic mower 105 is intended to be operated. The app may include similar purchasing and prompting functionality. As yet another example, a seller/retailer external device 115 (e.g., a kiosk/cash register computing device located at a shop/store) may receive the location coordinates as entered by the user and/or by an employee of the shop/store based on a discussion with the user at the time of purchase.

In some instances, the location coordinates may not be received via user input. Rather, in some instances, the robotic mower 105 and/or the external device 115A may acquire its own location coordinates, for example using its own GPS transceiver, and use its own location coordinates as the location coordinates utilized in block 505. For example, the robotic mower 105 may receive an instruction from the external device 115A in response to a user input on the external device 115A selecting to start a virtual boundary setup procedure once the user has brought the robotic mower 105 to the location in which the robotic mower 105 is intended to be operated (e.g., a lawn/yard of the user). As another example, in response to the external device 115A receiving the user input that selects to start the virtual boundary setup procedure, the external device 115A may acquire its own location coordinates of its current location (e.g., a lawn/yard of the user).

In some instances, the location coordinates include an address of a property in which the robotic mower 105 is intended to be operated. The location coordinates may additionally or alternatively include longitude and latitude coordinates and/or the like of an area in which the robotic mower 105 is intended to operate.

In some instances, the device 105, 115 that receives the location coordinates may also be configured to perform other blocks of the method 500 (e.g., one or both of blocks 510 and 515). In embodiments where a different device 105, 115, 145B besides the device 105, 115 that received the location coordinates is configured to perform one or both of the blocks 510 and 515, the device 105, 115 that received the location coordinates may transmit the location coordinates to the different device 105, 115, 145B for use in executing the blocks 510 and/or 515.

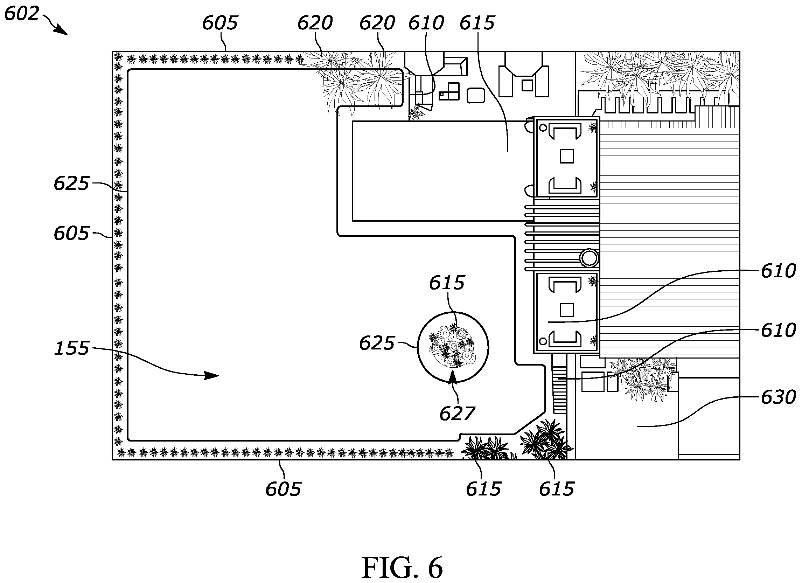

At block 510, one of the devices 105, 115, 145B retrieves from the first server 145A (e.g., the map/location information server 145A) and based on the location coordinates, a preexisting visual media file of the location in which the robotic garden tool 105 (e.g., the robotic mower 105) is intended to be operated. As explained previously herein, the preexisting visual media file may include metadata that includes coordinate information of the location shown in the preexisting visual media file. In some instances, one of the devices 105, 115, 145B may request the preexisting visual media file from the first server 145A using the location coordinates received at block 505. The first server 145A may retrieve the preexisting visual media file from its memory 410 (e.g., a database) using the location coordinates received in the request. The first server 145A may also send the preexisting visual media file to the requesting device 105, 115, 145B. An example definition of the preexisting visual media file is explained previously herein. In some instances, the preexisting visual media file includes an image including an aerial view of the location in which the robotic mower 105 is intended to be operated. For example, FIG. 6 illustrates an example image of an aerial view 602 of a location in which the robotic mower 105 is intended to be operated.

In some instances, the device 105, 115, 145B that retrieves the preexisting visual media file may also be configured to perform other blocks of the method 500 (e.g., block 515). In embodiments where a different device 105, 115, 145B besides the device 105, 115, 145B that retrieved the preexisting visual media file is configured to perform block 515, the device 105, 115, 145B that retrieved the preexisting visual media file may transmit the preexisting visual media file to the different device 105, 115, 145B for use in executing the block 515.

In some instances, one of the devices 105, 115 displays, the preexisting visual media file on the display 225, 325 for user confirmation that the location shown in the preexisting visual media file corresponds to the location in which the robotic mower 105 is intended to be operated. The device 105, 115 may receive, with the input device 220, 320, a user input (e.g., a second user input) confirming that the preexisting visual media file shows the location in which the robotic mower 105 is intended to be operated. In some instances in which the preexisting visual media file is displayed for user confirmation, block 515 may be performed in response to receiving the second user input confirming that the preexisting visual media file shows the location in which the robotic mower 105 is intended to be operated.

At block 515, one of the devices 105, 115, 145B generates virtual boundary coordinates of a virtual boundary 625 (see FIG. 6) for the robotic garden tool 105 (e.g., the robotic mower 105) based at least partially on the preexisting visual media file and the coordinate information (e.g., the metadata of the preexisting visual media file that includes the coordinate information of the location shown in the preexisting visual media file). As indicated previously herein, in addition to defining an outer virtual boundary (e.g., along an outer perimeter of the operating area 155) inside of which the robotic mower 105 is configured to operate, the virtual boundary 625 may also define one or more areas 627 in which the robotic mower 105 is configured not to operate/travel (e.g., an inner virtual boundary that surrounds a flower bed, a tree, etc. within an outer virtual boundary of the operating area 155) as shown in FIG. 6.

In some instances, one of the devices 105, 115, 145B generates the virtual boundary coordinates automatically (e.g., without user input except for possibly the above-noted confirmation that the preexisting visual media file shows the location in which the robotic mower 105 is intended to be operated). For example, automatic generation of the virtual boundary coordinates may include performing image analysis (e.g., using artificial intelligence/machine learning techniques and/or the like) of the preexisting visual media file to identify at least one of the group consisting of one or more property lines 605 of the location, one or more barriers 610 located at the location, one or more permanent obstacles 615 located at the location, and combinations thereof. FIG. 6 shows examples of property lines 605, barriers 610, and permanent obstacles 615 that may be identified using image analysis of the preexisting visual media file that is an aerial image 602 of the location in which the robotic mower 105 is intended to be operated. As shown in FIG. 6, the device 105, 115, 145B generating the virtual boundary coordinates may identify fencing, stairs, and/or an edge of a deck as barriers 610 that define an edge of a lawn to be mowed. The device 105, 115, 145B may also identify a pool, bushes, and a flower bed as permanent obstacles 615. In some instances, the device 105, 115, 145B may identify trees 620 separately than bushes 615 based on the image analysis. Because trees may take up space in the aerial image 602 that is not necessarily occupied on the ground underneath branches/leaves, the device 105, 115, 145B may identify trees and other similar objects as travel obstacles 620 that the robotic mower 105 may traverse around during operation (e.g., using one or more sensors 230 such as bump sensors, distance sensors, etc.) but not affecting the virtual boundary coordinates. In other instances, the device 105, 115, 145B may estimate a location and size of a trunk of the tree 620 and incorporate a no-operation zone at the estimated location of the trunk of the tree 620 into the virtual boundary coordinates. As indicated in FIG. 6, the device 105, 115, 145B may also identify objects (e.g., permanent object 615 shown as a flower bed, trees located within the operating area 155, etc.) around which an inner virtual boundary 625 is generated to prevent the robotic mower 105 from entering a respective area(s) (e.g., area 627 associated with the flower bed 615).

As the next step in automatic virtual boundary generation, the device 105, 115, 145B may determine, using the image analysis performed on the preexisting visual media file and the coordinate information of the location included in the preexisting visual media file, a respective location of each of the at least one of the group consisting of the property line(s) 605 of the location, the barrier(s) 610 located at the location, the permanent obstacle(s) 615 located at the location (and optionally the travel obstacle(s) 620 located at the location), and combinations thereof. For example, for each group of pixels included within the preexisting visual media file that make up each item 605, 610, 615, the device 105, 115, 145B may determine respective coordinate information (e.g., latitude and longitude coordinate information, or the like) from the metadata of the preexisting visual media file as the respective location of each item 605, 610, 615. The device 105, 115, 145B may then generate the virtual boundary coordinates based on the respective location of each of the at least one of the group consisting of the property line(s) 605 of the location, the barrier(s) 610 located at the location, the permanent obstacle(s) 615 located at the location (and optionally the travel obstacle(s) 620 located at the location), and combinations thereof. For example, the device 105, 115, 145B may form an enclosed loop using the respective locations of each of the at least one of the group consisting of the property line(s) 605 of the location, the barrier(s) 610 located at the location, the permanent obstacle(s) 615 located at the location, and combinations thereof. In instances where the device 105, 115, 145B takes a travel obstacle(s) 620 into account when generating the virtual boundary coordinates, the device 105, 115, 145B may create an island or a peninsula of virtual boundary coordinates around the location of the travel obstacle 620.

An example virtual boundary 625 is shown in FIG. 6. As indicated in FIG. 6, in some instances, the virtual boundary 625 may surround a largest portion of a yard (e.g., a backyard) that is shown in the preexisting visual media file. For example, the virtual boundary 625 defines the operating area 155 in a backyard because the backyard is larger than a front/side yard 630 shown in FIG. 6 and, based on image analysis, there is not a travel path between the backyard and the front/side yard 630. In instances in which there is a travel path between different portions of a yard as indicated by image analysis of the preexisting visual media file, the device 105, 115, 145B may generate the virtual boundary 625 to include numerous portions of the yard and to include the travel path between portion of the yard.

In some instances, after the virtual boundary coordinates are generated, the device 105, 115, 145B, may display the virtual boundary 625 to the user to request user confirmation. In some instances, one of the devices 105, 115 displays, the preexisting visual media file and a representation of the virtual boundary coordinates (e.g., the virtual boundary 625 as shown in FIG. 6) on the display 225, 325. The device 105, 115 may receive a second user input confirming that the virtual boundary coordinates have been generated in a desired manner. In response to receiving the second user input confirming that the virtual boundary coordinates have been generated in a desired manner, the device 115, 145B may transmit an indication that the virtual boundary coordinates have been generated in the desired manner to the robotic mower 105 to allow the first electronic processor 205 to control the robotic mower 105 to be confined by the virtual boundary 625. In some instances, the device 115, 145B may also transmit the virtual boundary coordinates to the robotic mower 105 in response to the device 105, 115 receiving the second user input confirming that the virtual boundary coordinates have been generated in a desired manner. In embodiments where the second user input is received on the robotic mower 105, such an indication may not be transmitted since the robotic mower 105 is the device that received the second user input.

Before providing the second user input confirming that the virtual boundary coordinates have been generated in a desired manner, the virtual boundary 625 may be edited by the user. For example, the device 105, 115 may receive a third user input that drags and drops the virtual boundary 625 or a portion of the virtual boundary 625, adds new boundary lines/areas, and/or removes existing boundary lines/areas. The device 105, 115 may determine revisions to the virtual boundary coordinates based on the respective locations where the third user input was received on the preexisting visual media file (e.g., in a similar manner as described above such as by using pixel information and corresponding coordinate information associated with the pixel information).

As an alternative to the automatic virtual boundary generation (and optional user confirmation of the automatic virtual boundary generation) described above, generating the virtual boundary coordinates (at block 515) may include receiving a user input with respect to the preexisting visual media file to define the virtual boundary coordinates. In some instances, the device 105, 115 displays the preexisting visual media file on the display 225, 325. The device 105, 115 then receives a second user input indicating a position of the virtual boundary 625 within the preexisting visual media file on the display 225, 325. For example, the second user input may include the user drawing one or more lines on a touchscreen that is displaying the preexisting visual media file. The user may drag and drop drawn lines and/or add new boundary lines/areas via the second user input. The device 105, 115 then generates the virtual boundary coordinates based on the second user input and the coordinate information of the location (e.g., in a similar manner as described above such as by using pixel information and corresponding coordinate information associated with the pixel information).

In some instances, the user input may be received on the first external device 115A or the robotic mower 105 from an owner/operator of the robotic mower 105. In some instances, the user input may be received on the second external device 115B from a service technician at a service center. In other words, either the owner/operator or a service technician may provide a user input to define the virtual boundary. In situations where the user input is received on the second external device 115B at a service center, the service center may provide virtual boundary generation services (e.g., after the robotic mower 105 has been purchased) to make installation of the robotic mower system less burdensome to the owner/operator who purchased the robotic mower 105. In some instances, an additional fee may be charged to the user to utilize the virtual boundary generation methods described herein and/or provided by the service center.

In some instances (e.g., in situations where the second external device 115B at the service center is used to generate the virtual boundary 625), the second external device 115B at the service center may receive the preexisting visual media file, for example, after the user has confirmed that the preexisting visual media file shows the location in which the robotic mower 105 is intended to be operated. In some instances, the preexisting visual media file has a first image resolution. In response to receiving the preexisting visual media file and the user confirmation, the second external device 115B may retrieve a second preexisting visual media file of the location in which the robotic mower 105 is intended to be operated. The second preexisting visual media file may have a second image resolution that is greater than the first image resolution of the initial preexisting visual media file. In some instances, the second preexisting visual media file may be retrieved from a different source (e.g., a different map/location server 145 operated and maintained by a different third party than the first server 145A). In some instances, the second preexisting visual media file may be retrieved by the second external device 115B in response to a user input received on the second external device 115B from a service technician operating the second external device 115B. In some instances, generating the virtual boundary coordinates (at block 515) includes generating the virtual boundary coordinates based at least partially on the second preexisting visual media file that has a higher image resolution than the initial preexisting visual media file. For example, the second external device 115B may generate the virtual boundary coordinates automatically and/or based on a user input from the service technician in a similar manner as described previously herein with respect to other instances. Using a higher resolution image to generate the virtual boundary coordinates (e.g., after the user confirms the location based on the lower resolution image) may allow the virtual boundary coordinates to be generated more precisely than if the lower resolution image was used to generate the virtual boundary coordinates. For example, image analysis may be more accurately performed on a higher resolution image. As another example, a user input may be more accurate when the user is providing the user input with respect to a higher resolution image.

When the device 105, 115, 145B that generates the virtual boundary coordinates is not the robotic mower 105, the device 115, 145B that generates the virtual boundary coordinates may transmit the virtual boundary coordinates to the robotic mower 105 for storage in the first memory 210 of the robotic mower 105. As indicated previously herein with respect to general communication between devices in the communication system 100, such transmission of the virtual boundary coordinates to the robotic mower 105 may be direct or indirect. For example, the device 115, 145B may directly transmit the virtual boundary coordinates to the robotic mower 105 without using an intermediary device. As another example, the second server 145B may transmit the virtual boundary coordinates to the first external device 115A, which in turn, transmits the virtual boundary coordinates to the robotic mower 105.

At block 520, the first electronic processor 205 of the robotic garden tool 105 (e.g., the robotic mower 105) controls the robotic garden tool 105 to be confined by the virtual boundary 625 to remain in the operating area 155 defined by the virtual boundary coordinates during operation of the robotic garden tool 105. For example, as explained previously herein, the robotic mower 105 may move randomly or may move in predetermined patterns within the operating area 155 and may change direction to remain within the operating area 155 when the robotic mower 105 determines that it has reached the virtual boundary 625 defined by the virtual boundary coordinates.

In some instances, the method 500 may be repeated to generate or adjust the virtual boundary 625 (e.g., when the user moves to a new property, when the user installs a new obstacle such as a pool, etc.).

In some instances, once the virtual boundary 625 has been generated, the robotic mower 105 may engage in a calibration operation to attempt to match the generated virtual boundary coordinates with current location coordinates of the robotic mower 105 within the operating area 155. To do so, in some instances, the robotic mower 105 and/or the first external device 115A may output an instruction (e.g., via the display 225, 325) that instructs the user to place the robotic mower 105 at one or more specific locations. For example, one specific location may be a specific corner of the virtual boundary 625 in a corner of a piece of property. The robotic mower 105 may then determining a current location of the robotic mower 105. The robotic mower 105 may then determining a drift vector by comparing the current location of the robotic mower 105 to a set of the virtual boundary coordinates corresponding to the specific location(s) at which the user was instructed to place the robotic mower 105. If the current location(s) of the robotic mower 105 is not the same as the set of virtual boundary coordinates corresponding to the specific location(s), the first electronic processor 205 may adjust (or provide an instruction to another device 115, 145 to adjust) each of the virtual boundary coordinates based on the drift vector. In other words, in some instances, all virtual boundary coordinates at all locations may be adjusted according to the drift vector to make the virtual boundary coordinates more accurate based on the determined current location of the robotic mower 105 with respect to one or more expected specific locations based on the virtual boundary coordinates.

Additionally or alternatively, in some instances, other calibration methods may be used to allow for adjustments of and/or additions to the virtual boundary coordinates. As one example, in some instances, after the virtual boundary coordinates are generated, the robotic mower 105 controls itself to travel along the virtual boundary 625 to be observed by the user. Based on this observation, the user may adjust the virtual boundary shown on the second display 325 of the external device 115A via user input. For example, the external device 115A may receive a user input to move a portion of the virtual boundary 625 closer to or further from a property line 605 based on how close the current path of the robotic mower 105 is to the property line 605. The user input may accordingly adjust the virtual boundary coordinates to updated virtual boundary coordinates that may be transmitted to the robotic mower 105 for storage and utilization during operation as explained previously herein.

As another example, in some instances, after the virtual boundary coordinates are generated, data points/waypoints may be added to the virtual boundary coordinates by the user placing the robotic mower 105 at a location desired to be included in the virtual boundary 625 but that was not traveled to by the robotic mower 105 during the virtual boundary tracing calibration process described in the above example. The external device 115A may then receive a user input that indicates that the current location of the robotic mower 105 should be added as a data point/waypoint to the virtual boundary coordinates. In some instances, the current location of the robotic mower 105 is added to the virtual boundary coordinates by removing a connection between the two nearest data points/waypoints of the existing virtual boundary coordinates to the new data point/waypoint and establishing the new data point/waypoint as a connecting point between the two nearest data points/waypoints. In some instances, the external device 115A may display the new data point/waypoint as well as nearby data points/waypoints of the virtual boundary coordinates and may allow the user to select connections between one or more sets of data points/waypoints to establish and/or adjust the virtual boundary coordinates. In some instances, the above addition of a data point/waypoint may be repeated at numerous locations as desired by the user by moving the robotic mower 105 to additional locations. The external device 115A may transmit updated virtual boundary coordinates to the robotic mower 105 for storage and utilization during operation as explained previously herein.

As explained previously herein and as indicated by the above explanation of FIG. 5, blocks 505, 510, and 515 of FIG. 5 may be performed by any one or multiple different devices of the communication system 100 in different instances.

In some instances, receiving the location coordinates (at block 505), retrieving the preexisting visual media file (at block 510), and generating the virtual boundary coordinates (at block 515) are performed by the first external device 115A of a user/owner of the robotic mower 105. In such instances, the first external device 115A may transmit, with the second network interface 315 of the first external device 115A, the virtual boundary coordinates to the robotic mower 105 for storage in the first memory 210 of the robotic mower 105.

In some instances, receiving the location coordinates (at block 505) is performed by one of the external devices 115, and the external device 115 transmits, with the second network interface 315, the location coordinates to the second server 145B. In some of such instances, retrieving the preexisting visual media file (at block 510) and generating the virtual boundary coordinates (at block 515) are performed by the second server 145B. In some of such instances, the second server 145B may transmit, with the third network interface 415, the virtual boundary coordinates to the robotic mower 105 (directly or indirectly via the first external device 115A as explained previously herein) for storage in the first memory 210 of the robotic mower 105. In some of such instances, the external device 115 includes one of the first external device 115A of a user of the robotic mower 105 or another external device 115 of a seller/retailer of the robotic mower 105 as explained previously herein.

In some instances, receiving the location coordinates (at block 505) and retrieving the preexisting visual media file (at block 510) are performed by one of the external devices 115. The external device 115 may be configured to transmit, with the second network interface 315 of the external device 115, the location coordinates and the preexisting visual media file to the robotic mower 105 or to the second server 145B for generation of the virtual boundary coordinates (at block 515). In some instances, generation of the virtual boundary coordinates may be performed by the second server 145B because the second server 145B may have more resources (e.g., processing capabilities, power supply capabilities, etc.) compared to the first external device 115A and/or the robotic mower 105.

Nevertheless, in some instances, receiving the location coordinates (at block 505), retrieving the preexisting visual media file (at block 510), and generating the virtual boundary coordinates (at block 515) are performed by the first electronic processor 205 of the robotic mower 105.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. A method of creating a virtual boundary for a robotic garden tool, the method comprising:
receiving location coordinates of a location in which the robotic garden tool is intended to be operated;
retrieving, from a first server and based on the location coordinates, a preexisting visual media file of the location in which the robotic garden tool is intended to be operated, wherein the preexisting visual media file includes metadata that includes coordinate information of the location shown in the preexisting visual media file;
generating virtual boundary coordinates of the virtual boundary based at least partially on the preexisting visual media file and the coordinate information; and
controlling, with a first electronic processor of the robotic garden tool, the robotic garden tool to be confined by the virtual boundary to remain in an operating area during operation of the robotic garden tool.

2. The method of claim 1, wherein receiving the location coordinates, retrieving the preexisting visual media file, and generating the virtual boundary coordinates are performed by an external device of a user, and further comprising:
transmitting, with a network interface of the external device, the virtual boundary coordinates to the robotic garden tool for storage in a memory of the robotic garden tool.

3. The method of claim 1, wherein receiving the location coordinates is performed by an external device, and wherein the method further comprises transmitting, with a first network interface of the external device, the location coordinates to a second server; and
wherein retrieving the preexisting visual media file and generating the virtual boundary coordinates are performed by the second server, and wherein the method further comprises transmitting, with a second network interface of the second server, the virtual boundary coordinates to the robotic garden tool for storage in a memory of the robotic garden tool;
and optionally
wherein the external device includes one of a first external device of a user of the robotic garden tool or a second external device of a seller of the robotic garden tool;
and optionally
wherein transmitting the virtual boundary coordinates to the robotic garden tool includes transmitting the virtual boundary coordinates to the robotic garden tool via the external device by transmitting, with the second network interface of the second server, the virtual boundary coordinates to the external device that then transmits, via the first network interface of the external device, the virtual boundary coordinates to the robotic garden tool.

4. The method of claim 1, wherein receiving the location coordinates and retrieving the preexisting visual media file are performed by an external device, and wherein the method further comprises transmitting, with a first network interface of the external device, the location coordinates and the preexisting visual media file to the robotic garden tool; and
wherein generating the virtual boundary coordinates is performed by the first electronic processor of the robotic garden tool.

5. The method of claim 1, wherein receiving the location coordinates, retrieving the preexisting visual media file, and generating the virtual boundary coordinates are performed by the first electronic processor of the robotic garden tool.

6. The method of claim 1, wherein the location coordinates include an address of a property in which the robotic garden tool is intended to be operated;
and optionally
wherein the preexisting visual media file includes an image including an aerial view of the location in which the robotic garden tool is intended to be operated.

7. The method of claim 1, wherein generating the virtual boundary coordinates includes:
performing image analysis of the preexisting visual media file to identify at least one of the group consisting of a property line of the location, a barrier located at the location, a permanent obstacle located at the location, and combinations thereof;
determining, using the image analysis and the coordinate information of the location, a respective location of each of the at least one of the group consisting of the property line of the location, the barrier located at the location, the permanent obstacle located at the location, and combinations thereof; and
generating the virtual boundary coordinates based on the respective location of each of the at least one of the group consisting of the property line of the location, the barrier located at the location, the permanent obstacle located at the location, and combinations thereof;
and optionally further comprising:
displaying, on a display of an external device, the preexisting visual media file and a representation of the virtual boundary coordinates;
receiving, with the external device, a user input confirming that the virtual boundary coordinates have been generated in a desired manner; and
in response to receiving the user input, transmit an indication that the virtual boundary coordinates have been generated in the desired manner to the robotic garden tool to allow the first electronic processor to control the robotic garden tool to be confined by the virtual boundary.

8. The method of claim 1, wherein generating the virtual boundary coordinates includes:
displaying, on a display of an external device, the preexisting visual media file;
receiving, with the external device, a user input indicating a position of the virtual boundary within the preexisting visual media file on the display; and
generating the virtual boundary coordinates based on the user input and the coordinate information of the location.

9. The method of claim 1, further comprising:
displaying, on a display of a first external device of a user of the robotic garden tool, the preexisting visual media file; and
receiving, with the first external device, a user input confirming that the preexisting visual media file shows the location in which the robotic garden tool is intended to be operated;
and optionally further comprising:
receiving, with a second external device located at a service center and operated by a service technician, the preexisting visual media file, wherein the preexisting visual media file has a first image resolution; and
retrieving, with the second external device, a second preexisting visual media file of the location in which the robotic garden tool is intended to be operated, wherein the second preexisting visual media file has a second image resolution that is greater than the first image resolution;
wherein generating the virtual boundary coordinates includes generating the virtual boundary coordinates based at least partially on the second preexisting visual media file.

10. The method of claim 1, further comprising:
outputting an instruction that instructs a user to place the robotic garden tool at a specific location;
determining, with the robotic garden tool, a current location of the robotic garden tool;
determining, with the first electronic processor, a drift vector by comparing the current location to a set of the virtual boundary coordinates corresponding to the specific location; and
adjusting, with the first electronic processor, each of the virtual boundary coordinates based on the drift vector.

11. A system comprising:
an external device including a user interface, a first network interface, and a first electronic processor, the first electronic processor configured to
receive location coordinates of a location in which a robotic garden tool is intended to be operated,
retrieve, with the first network interface from a first server and based on the location coordinates, a preexisting visual media file of the location in which the robotic garden tool is intended to be operated, wherein the preexisting visual media file includes metadata that includes coordinate information of the location shown in the preexisting visual media file,
generate virtual boundary coordinates based at least partially on the preexisting visual media file and the coordinate information, and
transmit, via the first network interface, the virtual boundary coordinates to the robotic garden tool; and
the robotic garden tool including
a housing,
a set of wheels coupled to the housing and configured to rotate to propel the robotic garden tool on an operating surface at the location,
at least one wheel motor coupled to one or more wheels of the set of wheels, the at least one wheel motor configured to drive rotation of the one or more wheels,
a second network interface, and
a second electronic processor configured to
receive, via the second network interface, the virtual boundary coordinates from the robotic garden tool, and
control the at least one wheel motor such that the robotic garden tool is confined by a virtual boundary defined by the virtual boundary coordinates to remain in an operating area during operation of the robotic garden tool.

12. The system of claim 11, wherein the first electronic processor is configured to generate the virtual boundary coordinates by:
performing image analysis of the preexisting visual media file to identify at least one of the group consisting of a property line of the location, a barrier located at the location, a permanent obstacle located at the location, and combinations thereof;
determining, using the image analysis and the coordinate information of the location, a respective location of each of the at least one of the group consisting of the property line of the location, the barrier located at the location, the permanent obstacle located at the location, and combinations thereof; and
generating the virtual boundary coordinates based on the respective location of each of the at least one of the group consisting of the property line of the location, the barrier located at the location, the permanent obstacle located at the location, and combinations thereof.

13. The system of claim 11, wherein the first electronic processor is configured to generate the virtual boundary coordinates by:
displaying, on the user interface, the preexisting visual media file;
receiving, with the user interface, a user input indicating a position of the virtual boundary within the preexisting visual media file on the user interface; and
generating the virtual boundary coordinates based on the user input and the coordinate information of the location.

14. The system of claim 11, wherein the first electronic processor is configured to:
display, on the user interface of the robotic garden tool, the preexisting visual media file, wherein the preexisting visual media file has a first image resolution;
receive, with the user interface, a user input confirming that the preexisting visual media file shows the location in which the robotic garden tool is intended to be operated; and
in response to receiving the user input, retrieve, via the first network interface, a second preexisting visual media file of the location in which the robotic garden tool is intended to be operated, wherein the second preexisting visual media file has a second image resolution that is greater than the first image resolution;
wherein the first electronic processor is configured to generate the virtual boundary coordinates based at least partially on the second preexisting visual media file.

15. The system of claim 11, wherein an instruction is configured to be output by (i) the first electronic processor on the user interface of the external device, the second electronic processor on an output device of the robotic garden tool, or both (i) and (ii), wherein the instruction instructs a user to place the robotic garden tool at a specific location; and
wherein the second electronic processor is configured to
determine a current location of the robotic garden tool,
determine a drift vector by comparing the current location to a set of the virtual boundary coordinates corresponding to the specific location, and
adjust each of the virtual boundary coordinates based on the drift vector.
